# EUROPÄISCHE PATENTSCHRIFT

(11) **EP 3 084 475 B1**
(45) Veröffentlichungstag und Bekanntmachung des Hinweises auf die Patenterteilung: **26.03.2025**
(21) Anmeldenummer: 14800017.7
(22) Anmeldetag: 14.11.2014
(51) Int. Cl.: G01T 1/20

(54) **RADIOMETRISCHES MESSGERÄT ZUR AUSFÜHRUNG VON MESSUNGEN IN EXPLOSIONSGEFÄHRDETEN BEREICHEN**
RADIOMETRIC MEASURING DEVICE FOR CARRYING OUT MEASUREMENTS IN EXPLOSION-PRONE AREAS
APPAREIL DE MESURE RADIOMÉTRIQUE POUR EFFECTUER DES MESURES DANS UNE ZONE À RISQUE D'EXPLOSION

(30) Priorität: 20.12.2013 DE 102013114617
(43) Veröffentlichungstag der Anmeldung: 26.10.2016
(73) Patentinhaber: Endress+Hauser SE+Co. KG, 79689 Maulburg (DE)
(72) Erfinder: BENZ, Dieter, 79713 Bad Säckingen (DE); WEIDENBRUCH, Simon, 79541 Lörrach (DE)
(74) Vertreter: Endress + Hauser Group Services (Deutschland) AG+Co. KG
(86) Internationale Anmeldenummer: PCT/EP2014/074642
(87) Internationale Veröffentlichungsnummer: WO 2015/090765

(56) Entgegenhaltungen:
- DE-A1- 102007 053 860
- DE-A1- 102009 002 816
- DE-A1- 102010 040 833
- DE-A1- 102011 004 061
- GB-A- 2 495 197
- JP-A- H05 297 144
- US-A1- 2013 301 801
- WHITEHOUSE SCOTT: "Serving Western Canadian Processors Yara Belle Plaine", 1 October 2011 (2011-10-01), XP055822950, Retrieved from the Internet <URL:http://www.physics.umanitoba.ca/u/tapash/PRWEST.pdf> [retrieved on 20210709]
- FOO EDWARD ET AL: "Certificate of Compliance Issued to: Endress + Hauser GmbH + Co. KG The products listed below are eligible to bear the CSA Mark shown PRODUCTS CLASS 2258 04 -PROCESS CONTROL EQUIPMENT -Intrinsically Safe", 8 April 2010 (2010-04-08), XP055822956, Retrieved from the Internet <URL:https://portal.endress.com/wa001/dla/5000121/3140/000/00/CofC%202277212.pdf> [retrieved on 20210709]
- HAUSER ENDRESS: "Technical Information Gammapilot M FMG60", 1 May 2007 (2007-05-01), XP055822959, Retrieved from the Internet <URL:http://www.merteh.lv/eh/pdf/TI363FEN.PDF> [retrieved on 20210709]
- HAUSER ENDRESS: "Functional safety manual RMA422 Process Transmitter", 1 January 2009 (2009-01-01), XP055822965, Retrieved from the Internet <URL:https://portal.endress.com/wa001/dla/5000082/4983/000/01/SD009Ren_1310.pdf> [retrieved on 20210709]

## Beschreibung

Die Erfindung betrifft ein radiometrisches Messgerät zur Ausführung von Messungen in explosionsgefährdeten Bereichen, mit einem Szintillator, der darauf auftreffende radioaktive Strahlung in Photonen umwandelt, und einem an den Szintillator angeschlossenen Detektor, der im Szintillator entstehende zum Detektor gelangende Photonen messtechnisch erfasst und in elektrische Messsignale umwandelt.

In der industriellen Messtechnik gibt es eine Vielzahl von Anwendungen, in denen radiometrische Messgeräte an Orten eingesetzt werden müssen, an denen die Gefahr einer Explosion besteht. Hier seien als Beispiel Tankstellen und Chemieanlagen, in denen explosive Gase auftreten können, genannt.

An Geräte, die in explosionsgefährdeten Bereichen einsetzbar sind, werden strenge Sicherheitsanforderungen gestellt. Diese haben das Ziel eine Funkenbildung, die ggf. eine Explosion auslösen könnte, zu vermeiden oder zu verhindern, dass ein im Inneren eines abgeschlossenen Raumes entstehender Funke Auswirkungen auf die Umgebung hat. Dieses Ziel ist auf verschiedenen Wegen erreichbar. Die entsprechenden Explosionsschutzmaßnahmen werden in Zündschutzarten unterteilt, die in entsprechenden Industrienormen, wie zum Beispiel der Normenreihe IEC 60079 der Internationalen Elektrotechnischen Kommission, geregelt sind. Eine Sicherheitsschaltung, über welche Messgeräte in explosionsgefährdeten Bereichen mit Leistung versorgt werden können, ist beispielsweise in der deutschen Veröffentlichungsschrift DE 10 2010 040833 A1 gezeigt und wird beispielsweise von der Firmengruppe Endress + Hauser unter dem Produktnamen "RMA42" vertrieben.

Eine in der Praxis für Messgeräte besonders relevante Zündschutzart ist die "Eigensicherheit (Ex-i)".Bei gemäß der Zündschutzart 'Eigensicherheit' ausgebildeten Geräten haben die Werte für die vorhandene elektrische Energie, die sich insb. in den elektrischen Größen Strom, Spannung und Leistung widerspiegelt, im Gerät zu jeder Zeit jeweils unterhalb eines vorgegebenen Grenzwertes zu liegen. Die Grenzwerte sind so gewählt, dass im Fehlerfall, z.B. durch einen Kurzschluss, die maximal frei werdende Energie nicht ausreicht, um einen Zündfunken oder eine gefährliche Überhitzung zu erzeugen. Üblicherweise wird die Energie durch leistungsbegrenzende Maßnahmen, zum Beispiel entsprechende Kombinationen von strom- und spannungsbegrenzenden Bauteilen, unter den vorgegebenen Grenzwerten gehalten. Zusätzlich sind, je nach Bauart des Geräts Mindestsicherheitsabstände oder Isolationsmaßnahmen zwischen einzelnen Komponenten oder Stromkreisen des Geräts vorzusehen. Eine Sicherheitsschaltung, mittels welcher Messgeräte in explosionsgefährdeten Bereichen durch Schutz-Widerstände eigensicher betrieben werden können, ist in der Patentanmeldung DE 10 2011 004 061 A1 gezeigt.

Wo eine Begrenzung der Energie auf eigensichere Werte nicht möglich ist, müssen zusätzlich Zündschutzmaßnahmen anderer Zündschutzarten, z.B. Zündschutzmaßnahmen der Zündschutzart "Druckkapselung (Ex d)", der Zündschutzart "Vergusskapselung (Ex m)", oder der Zündschutzart "Sandkapselung (Ex q)" angewandt werden. Das erfordert verhältnismäßig aufwändige mechanische Maßnahmen.

In radiometrischen Messgeräten vorgesehene Detektoren zur Detektion von ionisierender Strahlung benötigen für ihren Betrieb regelmäßig sehr hohe Betriebsspannungen, insb. Spannungen im Kilovolt- Bereich. Klassische Beispiele hierfür sind Geiger-Müller Zähler und Szintillations-Detektoren, bei denen auf einen Szintillator auftreffende GammaStrahlung im Szintillator in Lichtpulse umgesetzt wird, die dann über einen mit Hochspannung betriebenen Photomultiplier in elektrische Signale umgewandelt werden. Ein radiometrisches Messgerät, dass aus diesem Grund zu Explosionsschutz-Zwecken getaktet betrieben wird, ist in DE 10 2007 053 860 A1 gezeigt und wird von der Firmengruppe Endress + Hauser unter dem Produktnamen "FMG60" vertrieben.

Um diese Messgeräte in explosionsgefährdeten Bereichen einsetzen zu können, werden deren mit Hochspannung zu beaufschlagenden Komponenten heute regelmäßig in einer Vergusskapselung oder in einer druckfesten Kapselung untergebracht. Zusätzlich ist durch ausreichend große räumliche Entfernung und elektrische Isolation dieser Komponenten von den übrigen Komponenten des Messgeräts ein möglicher Überschlag der hohen Spannungen auf ungeschützte Bereiche, insbesondere auf eigensichere Signalstromkreise, zu verhindern. Es müssen also neben den Maßnahmen der Zündschutzart "Eigensicherheit (Ex-i)" immer auch Maßnahmen anderer Zündschutzarten, insb. aufwendige Kapselungen, eingesetzt werden. Ein auf Radiometrie basierendes Messgerät, welches mittels Druckkapselung gekapselt ist, wird beispielsweise in der Veröffentlichungsschrift DE 10 2009 002816 A1 beschrieben. Ein feuerbeständig gekapseltes Messgerät, das auf Radiometrie beruht, wird in GB 02495197 A1 gezeigt.

Diese parallel vorzusehenden Maßnahmen sind nicht nur kostenintensiv, sondern benötigen auch viel Platz. Entsprechend können diese Messgerät nur dort eingesetzt werden, wo am Messort ausreichend Platz für das Messgerät zur Verfügung steht.

Es ist eine Aufgabe der Erfindung ein radiometrisches Messgerät, mit
einem Detektor zur Detektion von ionisierender Strahlung anzugeben, mit dem Messungen in explosionsgefährdeten Bereichen ausführbar sind, das am Messort nur wenig Platz benötigt, kostengünstig herstellbar ist, und insb. mit einfachen Mitteln sicher installiert werden kann.

Gelöst wird diese Aufgabe durch das in Anspruch 1 beanspruchte Messgerät. Vorteilhafte Ausführungsvarianten hiervon sind in den Unteransprüchen beschrieben.

Die Erfindung und weitere Vorteile werden nun anhand der Figuren der Zeichnung, in denen drei Ausführungsbeispiele dargestellt sind, näher erläutert; gleiche Elemente sind in den Figuren mit denselben Bezugszeichen versehen.
- Fig. 1 zeigt:: ein als Grenzschalter eingesetztes erfindungsgemäßes radiometrisches Messgerät;
- Fig. 2 zeigt:: ein radiometrisches Messgerät mit einer über ein Zusatzschaltung gespeisten Messeinheit; und
- Fig. 3 zeigt:: ein radiometrisches Messgerät mit einer mit einem RFID-Transponder ausgestatteten Messeinheit.

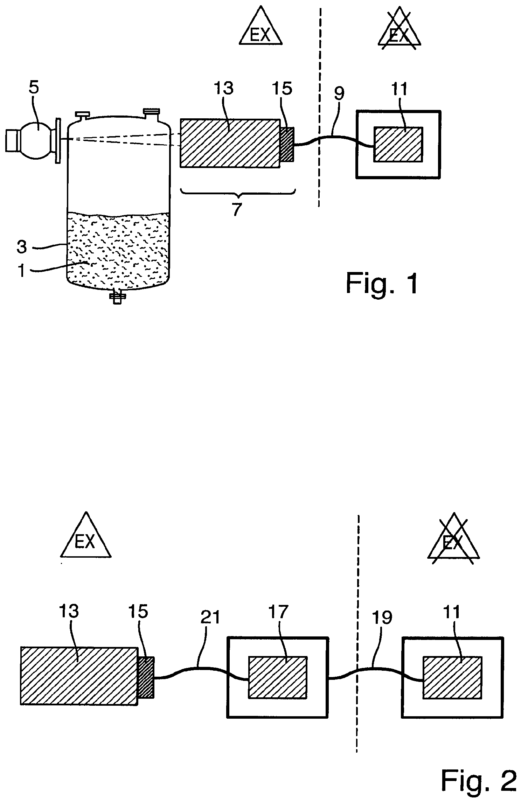

Fig. 1 zeigt ein Anwendungsbeispiel für den Einsatz eines erfindungsgemäßen radiometrischen Messgeräts. Als Ausführungsbeispiel ist hier ein radiometrischer Grenzschalter dargestellt, der ein Über- oder Unterschreiten eines vorbestimmten Füllstands eines Füllguts 1 in einem Behälter 3 überwacht. Der Behälter 3 befindet sich in einem - in Fig. 1 mit 'Ex' bezeichneten - explosionsgefährdeten Bereich. Die dargestellte Messanordnung umfasst einen auf der Höhe des zu überwachenden Füllstands außenseitlich am Behälter 3 angeordneten radioaktiven Strahler 5, der ionisierende Strahlung, insb. Gammastrahlung, auf der Höhe des vorbestimmten Füllstands durch den Behälters 3 sendet. Dabei ist die durch den Behälter 3 hindurch auf der dem Strahler 5 gegenüberliegenden Seite des Behälters 3 austretende Strahlungsintensität abhängig von der Absorption im Behälter 3, die wiederum vom Füllstand im Behälter 3 abhängig ist.

Das Messgerät umfasst eine im explosionsgefährdeten Bereich montierbare über eine eigensichere Energieversorgung betreibbare Messeinheit 7 und eine daran über eine Anschlussleitung 9 anzuschließende außerhalb des explosionsgefährdeten Bereichs anzuordnende übergeordnete Einheit 11, die die eigensichere Energieversorgung der Messeinheit 7 bewirkt. Die übergeordnete Einheit 11 ist beispielsweise ein Messumformerspeisegerät.

Die Messeinheit 7 misst die aus dem Behälter 3 austretende Strahlungsintensität. Anhand der gemessenen Strahlungsintensität wird ein Überschreiten des vorbestimmten Füllstands erkannt, wenn die gemessene Strahlungsintensität einen vorgegeben Schwellwert unterschreitet bzw. ein Unterschreiten des vorbestimmten Füllstands erkannt, wenn die gemessene Strahlungsintensität einen vorgegeben Schwellwert überschreitet.

Alternativ können mit dem erfindungsgemäßen radiometrischen Messgerät durch eine entsprechende Anordnung von Strahler 5 und Messeinheit 7 auch andere Messgrößen, wie zum Beispiel ein Füllstand eines in einem Behälter befindlichen Füllguts, oder eine Dichte eines durchstrahlten Mediums bestimmt werden.

Die Messeinheit 7 weist ausschließlich für sich genommen und in Kombination mit einander der Zündschutzart 'Eigensicherheit' genügende, im Messbetrieb mit Energie zu versorgende, elektrische Komponenten auf. D.h. alle vorgesehenen, mit Energie zu versorgenden elektrischen Komponenten, benötigen sowohl jeweils für sich genommen als auch in Kombination mit einander nicht mehr Strom, Spannung und Leistung, als über die eigensichere Versorgung zur Verfügung steht.

Erfindungsgemäß sind in der Messeinheit 7 ausschließlich solche Explosionsschutzmaßnahmen vorgesehen, die der Zündschutzart der Eigensicherheit zuzuordnen sind. Explosionsschutzmaßnahmen anderer Zündschutzarten sind nicht vorgesehen und nicht erforderlich.

Die Messeinheit 7 umfasst einen hier stabförmigen Szintillator 13, der darauf auftreffende ionisierende Strahlung in Photonen umwandelt, die sich dann entlang des Szintillators 13 ausbreiten. Anstelle eines massiven Szintillationskörpers können alternativ auch einzelne oder mehrere beispielsweise zu einem Bündel zusammengefasste Szintillationsfasern als Szintillator 13 eingesetzt werden. Der Szintillator 13 führt weder Strom, noch ist er mit Spannung beaufschlagt.

An den Szintillator 13 ist endseitig mindestens ein über eine eigensichere Energieversorgung betreibbarer Halbleiter-Detektor 15 angeschlossen, der im Szintillator 13 entstehende zum Halbleiter-Detektor 15 gelangende Photonen messtechnisch erfasst und in elektrische Messsignale umwandelt. Der Halbleiter-Detektor 15 ist vorzugsweise ein Halbleiter-Detektor Chip.

Zum Schutz vor Umwelteinflüssen kann eine den Szintillator 13 umgebende Ummantelung, z.B. ein Schutzrohr, und eine den Halbleiter-Detektor 15 umgebende Chip-Einfassung vorgesehen sein.

Für einen eigensicheren Betrieb eignen sich insb. die vorgenannten Halbleiter-Detektor-Chips. Beispiele hierfür sind die von Philips unter der Bezeichnung DPC6400-22-44 vertriebenen Komponenten, oder die unter der Bezeichnung DPC3200-22-44 vertriebenen Digital Silicon Photomultiplier, die von Ketek unter der Bezeichnung PM3350 vertriebenen Silicon Photomultiplier, oder von SensL vertriebene Silicon Photomultiplier.

Der Halbleiter-Detektor 15 umfasst eine oder mehrere dem Szintillator 13 zugewandte Stirnseiten, die mit einer oder mehreren lichtempfindlichen Zellen ausgestattet ist. Die lichtempfindlichen Zellen umfassen jeweils eine oder mehrere beispielsweise in einem Array angeordnete Photodioden. Die Photodioden sind vorzugsweise im Geiger-Mode betriebene elektrisch parallel geschaltete Avalanche Photodioden. Die Funktionsweise derartiger Halbleiter-Detektoren ist zum Beispiel in der Englischen Patentanmeldung GB 2479053 A beschrieben.

Im Hinblick auf den eigensicheren Betrieb der Messeinheit 7, insb. des Halbleiter-Detektors 15, werden Halbleiter-Detektor-Chips eingesetzt, die mit Photodioden ausgestattet sind, die niedrige Durchbruchspannungen von weniger als 30 V, vorzugsweise sogar weniger als 20 V aufweisen, und somit mit entsprechend niedriger Betriebsspannung, insb. einer Betriebsspannung kleiner 30 V betrieben werden können. Hierzu eignen sich insb. die oben aufgeführten Halbleiter-Detektor-Chips der oben genannten Hersteller.

Im Messbetrieb wird die Messeinheit 7 von der übergeordneten Einheit 11 eigensicher versorgt. Vorzugsweise ist der Halbleiter-Detektor 15 als eigensicher betreibbarer Halbleiter-Detektor-Chip ausgebildet, und stellt die einzige in der Messeinheit 7 vorgesehene im Messbetrieb mit Energie zu versorgenden elektrische Komponente dar. Dadurch ist es möglich sich in der Messeinheit 7 auf Maßnahmen der Zündschutzart Eigensicherheit zu beschränken oder sogar vollständig auf weitere der Zündschutzart der Eigensicherheit zuzuordnende Maßnahmen, wie z.B. Isolierungen und/oder Mindestabstände zwischen mit Energie zu versorgenden Komponenten, zu verzichten.

Zur Veranschaulichung ist hierzu nachfolgend ein auf den Anforderungen der Norm IEC60079-11 für die Zündschutzart Ex ia für die Gasgruppe IIC und die Temperaturklasse T4 basiertes Beispiel für einen der oben genannten Halbleiter-Detektoren 15 angegeben, dessen Versorgungsbedarf durch eine Betriebsspannung von 28 V, einen Betriebsstrom von höchstens 2 mA, und einen dem entsprechenden Leistungsbedarf von maximal 56 mW gegeben ist. Dieser Halbleiter-Detektor 15 weist eine innere Kapazität von 3,5 nF, eine innere Induktivität von 200 µH, und einen thermischen Widerstand von 500 K/W auf. Er ist für einen Betrieb in einem Temperaturbereich von - 20°C bis + 50°C vorgesehen.

Als übergeordnete Einheit 11 ist hier als Beispiel ein der Zündschutzart Ex ia IIC genügendes gemäß der Norm IEC60079-11 ausgelegtes Messumformer-Speisegerät vorgesehen, das sicherheitstechnisch eine maximale Ausgangsspannung von 30 V, einen maximalen Ausgangsstrom von 3 mA und eine maximale Ausgangsleistung von 90 mV bereit stellt, und eine äußere konzentrierte Kapazität von maximal 60 nF, und eine äußere konzentrierte Induktivität von maximal 100 mH erlaubt.

Als Anschlussleitung 9 wird eine Koaxialleitung mit einer Kapazität von 18 nF und einer Induktivität von 100 µH eingesetzt.

Ausgangsspannung, Ausgangsstrom und Ausgangsleistung der übergeordneten Einheit 11 decken den Versorgungsbedarf des Halbleiter-Detektors 15 ab.

Darüber hinaus ist die Summe der Kapazitäten von Halbleiter-Detektor 15 und Anschlussleitung 9 kleiner als die zulässige anschließbare Kapazität der übergeordneten Einheit 11, und die Summe der Induktivitäten von Halbleiter-Detektor 15 und Anschlussleitung 9 ist kleiner als die zulässige anschließbare Induktivität der übergeordneten Einheit 11.

Die Kapazität des Halbleiter-Detektors 15 liegt mit 3,5 nF deutlich unterhalb des sich für die vorliegenden Spannungswerte gemäß der IEC60079-11 ergebenden Kapazitätsobergrenze von 66 nF.

Ebenso liegt die Induktivität des Halbleiter-Detektors 15 mit 1 µH deutlich unterhalb des sich für die vorliegenden Stromwerte gemäß der IEC60079-11 ergebenden Induktivitätsobergrenze von 1 mH.

Tritt ein Fehlerfall ein, bei dem die gesamte im Halbleiter-Detektor 15 maximal vorhandene Leistung von 90 mW über dessen thermischen Widerstand mit dem oben genannten Umwandlungsfaktor von 500 K/W in Wärme umgewandelt wird, steigt die Temperatur um 45 °C. Damit liegt die Temperatur im Halbleiter-Detektor 15 auch dann noch unterhalb der durch die Temperaturklasse 4 vorgegebenen Obergrenze von 130 °C, wenn der Halbleiter-Detektor 15 bei einer der Bereichsobergrenze entsprechenden Temperatur von + 50 °C eingesetzt wurde, und sich seine Temperatur ausgehend von dieser Bereichsobergrenze aufgrund einer Umwandlung der gesamten Leistung um 45 °C erhöht.

Die Messeinheit 7 kann somit im explosionsgefährdeten Bereich eingesetzt werden, ohne dass neben den der Zündschutzart der Eigensicherheit zuzuordnenden Maßnahmen weitere Maßnahmen anderer Zündschutzarten erforderlich sind. Hierdurch kann die Messeinheit 7 sehr kompakt und kostengünstig hergestellt werden. Darüber hinaus ist sie einfach und sicher zu installieren.

Grundsätzlich können auch zwei oder mehr Halbleiter-Detektoren 15 parallel zueinander über entsprechende Anschlussleitungen 9 an die übergeordnete Einheit 11 angeschlossen, und über die übergeordnete Einheit 11 mit Energie versorgt werden. Da die Eigensicherheit über eine einzige eigensichere Speisung durch die übergeordnete Einheit 11 sichergestellt ist, sind hierzu keine zusätzlichen Explosionsschutzmaßnahmen erforderlich. Es sind lediglich die Regeln der eigensicheren Auslegung gemäß der IEC60079-11 anzuwenden.

Fig. 2 zeigt ein alternatives Ausführungsbeispiel eines erfindungsgemäßen radiometrischen Messgeräts. Aufgrund der Übereinstimmungen mit dem in Fig. 1 dargestellten Ausführungsbeispiel sind nachfolgende lediglich die bestehenden Unterschiede näher erläutert. Im Übrigen wird auf die Beschreibung zu Fig. 1 verwiesen. Im Unterschied zu dem in Fig. 1 dargestellten Ausführungsbeispiel erfolgt die Speisung des Halbleiter-Detektors 15 hier über eine zwischen dem Halbleiter-Detektor 15 und der übergeordneten Einheit 11 angeordnete eigensichere Zusatzschaltung 17. In Verbindung mit dem oben im Detail beschriebenen Beispiel eignet sich insb. eine gemäß der Zündschutzart Ex ia IIC T4 ausgebildete Zusatzschaltung 17. Die Zusatzschaltung 17 ist über eine Anschlussleitung 19, z.B. ein zweiadriges Installationskabel, an die übergeordnete Einheit 11 angeschlossen, über die sie eigensicher gespeist wird. Darüber hinaus ist sie über eine Anschlussleitung 21, z.B. eine Koaxialleitung, an den Halbleiter-Detektor 15 angeschlossen, und bewirkt dessen eigensichere Versorgung. Bei dieser Ausführungsform geben die maximale Ausgangsspannung, der maximale Ausgangsstrom und die maximale Ausgangsleistung der Zusatzschaltung 17 die entsprechenden maximalen Eingangswerte auf Seiten des Halbleiter-Detektors 15 vor. Diese sind betragsmäßig identisch zu den zuvor für die unmittelbar speisende übergeordnete Einheit 11 angegebenen Werten.

Die Zusatzschaltung 17 kann genau wie der Halbleiter-Detektor 15 im explosionsgefährdeten Bereich betrieben werden. Neben den für die Zündschutzart der Eigensicherheit entsprechenden Maßnahmen sind auch hier keine weiteren Maßnahmen anderer Zündschutzarten erforderlich.

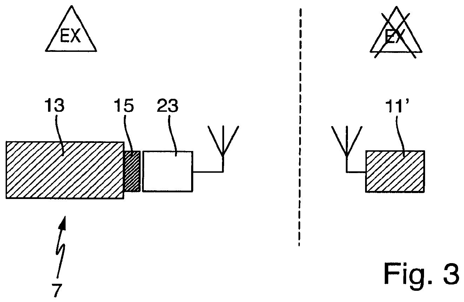

Fig. 3 zeigt ein weiteres Beispiel, das für das Verständnis der vorliegenden Erfindung nützlich ist, aber nicht zu ihr gehört. Es unterscheidet sich von den in Fig. 1 und 2 dargestellten Ausführungsbeispiel dadurch, dass die Speisung der Messeinheit 7 drahtlos erfolgt und der Halbleiter-Detektor 15 viel weniger Betriebsenergiebedarf hat. Hierzu ist die Messeinheit 7 mit einem an den Halbleiter-Detektor 15 angeschlossenen oder in diesem integrierten RFID Transponder 23 ausgestattet. Die übergeordnete Einheit 11' ist hier als RFID Lesegerät ausgebildet, über das die Messeinheit 7 drahtlos und eigensicher mit Energie versorgt wird, und die Messergebnisse der Messeinheit 7 ausgelesen werden. Die dabei von dem RFID Lesegerät an den Halbleiter-Detektor 15 abgegebene Versorgungsenergie ist auch hier so gering, dass die Zündschutzart "Eigensicherheit" aufrechterhalten wird. Auch bei dieser Ausführungsform sind in der Messeinheit 7 neben den der Zündschutzart der Eigensicherheit zuzuordnenden Maßnahmen keine weiteren Maßnahmen anderer Zündschutzarten erforderlich.
- 1: Füllgut
- 3: Behälter
- 5: radioaktiver Strahler
- 7: Messeinheit
- 9: Anschlussleitung
- 11: übergeordnete Einheit
- 11': übergeordnete Einheit
- 13: Szintillator
- 15: Halbleiter-Detektor-Chip
- 17: Zusatzschaltung
- 19: Anschlussleitung
- 21: Anschlussleitung
- 23: RFID Transponder

## Patentansprüche

1. Radiometrisches Messgerät, das ausgeführt ist, als Messwert eine Dichte oder einen Füllstand eines in einem Behälter (3) befindlichen Füllgutes (1) zu bestimmen, wobei der Behälter (3) in einem explosionsgefährdeten Bereich angeordnet ist, mit
- einer im explosionsgefährdeten Bereich einsetzbaren Messeinheit (7), mit
-- einem Szintillator (13), der derart angeordnet ist, dass der Szintillator (13) aus dem Behälter (3) austretende radioaktive Strahlung in Photonen umwandelt, und
-- einem an den Szintillator (13) angeschlossenen über eine eigensichere Energieversorgung betreibbaren Halbleiter-Detektor (15), der im Szintillator (13) entstehende zum Halbleiter-Detektor (15) gelangende Photonen messtechnisch erfasst und in elektrische Messsignale umwandelt,
-- einem an die Messeinheit (7) angeschlossenen Messumformer-Speisegerät (11),
-- wobei in der Messeinheit (7) ausschließlich der Zündschutzart der Eigensicherheit zuzuordnende Explosionsschutzmaßnahmen vorgesehen sind,
-- wobei das Messumformer-Speisegerät (11) außerhalb des explosionsgefährdeten Bereichs angeordnet ist, und
-- wobei das Messumformer-Speisegerät (11) dazu eingerichtet ist, im Messbetrieb eine eigensichere Energie-Versorgung des Halbleiter-Detektors (15) zu bewirken.

2. Radiometrisches Messgerät nach Anspruch 1, bei dem
- der Halbleiter-Detektor (15) die einzige in der Messeinheit (7) vorgesehene im Messbetrieb mit Energie zu versorgende elektrische Komponente ist, und
- in der Messeinheit (7) nur eine einzige der Zündschutzart der Eigensicherheit zuzuordnende Explosionsschutzmaßnahme vorgesehen ist, die darin besteht, dass der Halbleiter-Detektor (15) ein über eine eigensichere Energieversorgung betreibbarer Halbleiter-Detektor-Chip ist.

3. Radiometrisches Messgerät nach einem der vorangehenden Ansprüche, bei dem
- der Halbleiter-Detektor (15) ein Halbleiter-Detektor-Chip mit einer oder mehreren parallel geschalteten lichtempfindlichen Zellen ist,
- die lichtempfindlichen Zellen Photodioden, insb. im Geiger-Mode betriebene Avalanche Photodioden, aufweisen, und
- die Photodioden niedrige Durchbruchspannungen von weniger als 30 V, insb. weniger als 20 V aufweisen, und
- der Halbleiter-Detektor (15) mit einer entsprechend niedrigen Betriebsspannung, insb. einer Betriebsspannung kleiner gleich 30 V, betreibbar ist.

4. Radiometrisches Messgerät nach einem der vorangehenden Ansprüche, bei dem
- zwischen dem Halbleiter-Detektor (15) und dem Messumformer-Speisegerät (11) eine eigensichere Zusatzschaltung (17) vorgesehen ist,
- die Zusatzschaltung (17) über das Messumformer-Speisegerät (11) eigensicher gespeist ist, und
- die Zusatzschaltung (17) eine eigensichere Speisung des Halbleiter-Detektors (15) bewirkt.

## Claims

1. A radiometric measuring device, which is configured to determine as a measured value a density or a fill level of a filling material (1) located in a container (3), wherein the container (3) is arranged in a potentially explosive atmosphere, with
- a measuring unit (7) which can be used in a potentially explosive atmosphere, with
∘ a scintillator (13), which is arranged in such a way that the scintillator (13) converts radioactive radiation coming from the container (3) into photons, and
∘ a semiconductor detector (15) which is connected to the scintillator (13) and can be operated by an intrinsically safe power supply, which measures photons that are produced in the scintillator (13) and reach the semiconductor detector (15) and converts these into electrical measurement signals,
∘ a transmitter power supply unit (11) connected to the measuring unit (7),
∘ wherein only the explosion protection measures that are assigned to the intrinsic safety type of ignition protection are provided in the measuring unit (7),
∘ wherein the transmitter power supply unit (11) is arranged outside the potentially explosive atmosphere, and
∘ wherein the transmitter power supply unit (11) is configured to provide an intrinsically safe power supply to the semiconductor detector (15) in measuring mode.

2. The radiometric measuring device as claimed in claim 1, in which
- the semiconductor detector (15) is the only electrical component in the measuring unit (7) that is intended to be supplied with power in measuring mode, and
- only a single explosion protection measure that is assigned to the intrinsic safety type of protection is provided in the measuring unit (7), which entails the semiconductor detector (15) being a semiconductor detector chip that can be operated by an intrinsically safe power supply.

3. The radiometric measuring device as claimed in one of the preceding claims, in which
- the semiconductor detector (15) is a semiconductor detector chip with one or more light-sensitive cells connected in parallel,
- the light-sensitive cells have photodiodes, in particular Geiger-mode avalanche photodiodes, and
- the photodiodes have low breakdown voltages of less than 30 V, in particular less than 20 V, and
- the semiconductor detector (15) can be operated with a correspondingly low operating voltage, in particular an operating voltage less than or equal to 30 V.

4. The radiometric measuring device as claimed in one of the preceding claims, in which
- an intrinsically safe auxiliary circuit (17) is provided between the semiconductor detector (15) and the transmitter power supply unit (11),
- the auxiliary circuit (17) is supplied with intrinsically safe power via the transmitter power supply unit (11), and
- the auxiliary circuit (17) provides an intrinsically safe power supply to the semiconductor detector (15).

## Revendications

1. Appareil de mesure radiométrique conçu pour déterminer comme valeur mesurée une densité ou un niveau d'un produit (1) se trouvant dans un réservoir (3), le réservoir (3) étant disposé dans une zone explosible, lequel appareil comprend
- une unité de mesure (7) utilisable dans la zone explosible, laquelle unité comprend
-- un scintillateur (13), lequel est disposé de telle sorte que le scintillateur (13) transforme en photons le rayonnement radioactif sortant du réservoir (3), et
-- un détecteur à semi-conducteur (15) raccordé au scintillateur (13) et pouvant être alimenté par une alimentation en énergie à sécurité intrinsèque, lequel détecteur détecte les photons produits dans le scintillateur (13), lesquels photons parviennent au détecteur à semi-conducteur (15) , lequel détecteur convertit lesdits photons en signaux de mesure électriques,
-- une unité d'alimentation de transmetteur (11) raccordée à l'unité de mesure (7),
-- des mesures de protection antidéflagrante, devant être affectées exclusivement au mode de protection antidéflagrant de la sécurité intrinsèque, étant prévues dans l'unité de mesure (7),
-- l'unité d'alimentation de transmetteur (11) étant disposée à l'extérieur de la zone explosible, et
-- l'unité d'alimentation de transmetteur (11) étant conçue pour générer une alimentation en énergie à sécurité intrinsèque du détecteur à semi-conducteur (15) en mode de mesure.

2. Appareil de mesure radiométrique selon la revendication 1, pour lequel
- le détecteur à semi-conducteur (15) est le seul composant électrique - prévu dans l'unité de mesure (7) - devant être alimenté en énergie en mode de mesure, et
- il n'est prévu dans l'unité de mesure (7) qu'une seule mesure de protection antidéflagrante devant être affectée au mode de protection antidéflagrant de la sécurité intrinsèque, laquelle mesure consiste en ce que le détecteur à semi-conducteur (15) est une puce de détection à semi-conducteur pouvant fonctionner par l'intermédiaire d'une alimentation en énergie à sécurité intrinsèque.

3. Appareil de mesure radiométrique selon l'une des revendications précédentes, pour lequel
- le détecteur à semi-conducteur (15) est une puce de détection à semi-conducteur avec une ou plusieurs cellules photosensibles montées en parallèle,
- les cellules photosensibles étant des photodiodes, notamment des photodiodes avalanche, et
- les photodiodes présentant de faibles tensions de claquage inférieures à 30 V, notamment inférieures à 20 V, et
- le détecteur à semi-conducteur (15) pouvant fonctionner avec une tension de fonctionnement basse correspondante, notamment une tension de fonctionnement inférieure ou égale à 30 V.

4. Appareil de mesure radiométrique selon l'une des revendications précédentes, pour lequel
- un circuit supplémentaire à sécurité intrinsèque (17) est prévu entre le détecteur à semi-conducteur (15) et l'unité d'alimentation de transmetteur (11),
- le circuit supplémentaire (17) étant alimenté en mode sécurité intrinsèque par l'intermédiaire de l'unité d'alimentation de transmetteur (11), et
- le circuit supplémentaire (17) générant une alimentation à sécurité intrinsèque du détecteur à semi-conducteur (15).
